# EUROPEAN PATENT SPECIFICATION

(11) **EP 2 829 107 B1**
(45) Date of publication and mention of the grant of the patent: **04.10.2017**
(21) Application number: 13722052.1
(22) Date of filing: 18.03.2013
(51) Int. Cl.: H04W 24/10, H04W 88/08

(54) **METHOD AND DEVICE FOR MANAGING COORDINATED MULTI-POINT**
VERFAHREN UND GERÄT ZUM VERWALTEN DES KOORDINIERTEN VIELFACHPUNKTES
PROCÉDÉ ET DISPOSITIF DE GESTION DE MULTIPOINT COORDONNÉ

(30) Priority: 19.03.2012 CN 201210074085
(43) Date of publication of application: 28.01.2015
(73) Proprietor: ALCATEL LUCENT, 92100 Boulogne-Billancourt (FR)
(72) Inventor: DENG, Yun, 201206 Shanghai (CN); SHE, Feng, 201206 Shanghai (CN); LIM, Seau Sian, Swindon Wiltshire SN1 4GU (GB)
(74) Representative: Wetzel, Emmanuelle
(86) International application number: PCT/IB2013/000601
(87) International publication number: WO 2013/140244

(56) References cited:
- WO-A1-2013/020520
- ALCATEL-LUCENT ET AL: "CoMP Operation and UE Mobility", 3GPP DRAFT; R1-120496_COMP_OPERATIONS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 2 February 2012 (2012-02-02), XP050563324, [retrieved on 2012-02-02]
- "3rd Generation Partnership Project; Technical Specification Group Radio Access Network; Evolved Universal Terrestrial Radio Access (E-UTRA); Radio Resource Control (RRC); Protocol specification (Release 10)", 3GPP DRAFT; DRAFT_36331-A50_UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 12 March 2012 (2012-03-12), XP050664080, Retrieved from the Internet: URL:http://www.3gpp.org/ftp/tsg_ran/WG2_RL 2/Specifications/201203_draft_specs_after_ RAN_55/ [retrieved on 2012-03-12]
- "Discussion on RRM/CoMP Measurement Set Management", 3GPP DRAFT; R1-120244_DISCUSSION_ON_RRM-COMP_MEASUREME NT_SET_MANAGEMENT_, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden,Germany; 20120206 - 20120210, 31 January 2012 (2012-01-31), XP050562799, [retrieved on 2012-01-31]
- ERICSSON ET AL: "Use of CSI-RS for CoMP Measurement Set Management", 3GPP DRAFT; R1-120786 USE OF CSI-RS FOR COMP MEASUREMENT SET MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563293, [retrieved on 2012-02-01]

## Description

### Background of the Invention

### Field of the Invention

The present invention relates to a method and a device for managing Coordinated Multi-Point (CoMP), and in particular, to a method and a device for managing a CoMP measurement set or cooperating set based on a measurement report of a User Equipment (UE).

### Description of the Prior Art

CoMP transmission is a prospecting technology in the Long Term Evolution-Advanced (LTE-Advanced) project. It can effectively reduce inter-cell interference (ICI) and improve the coverage of high data rate, the cell edge throughput, and/or system throughput. The coordination can be implemented between homogenerous or heterogeneous networks.

An important scenario confirmed in the 3rd Generation Partnership Project (3GPP) is that, in the coverage of a macro cell, a transport/receiving point created by each Remote Radio Head (RRH) has the same cell identifier with a macro cell. In this scenario, the network can use one or more transmission ports to transmit data to or receive data from a UE. To facilitate the CoMP configuration and to prevent the network from collapsing, the network needs to select proper ports to establish a cooperating set according to measurement information about these ports provided by the UE, and maintain the cooperating set.

According to current protocol specifications, Reference Signal Received Power (RSRP) is defined as a linear average of power contributions of resources that bear Cell-specific Reference Signals (CRSs) in the measurement frequency band. In short, only measurement for the RSRP of the CRS is provided. For example, according to the specification TS36.211 in the 3GPP, the CRS mapped on an antenna port 0 is used to determine the RSRP. If the UE can reliably detect the CRS mapped on an antenna port 1, the CRS mapped on the antenna port 1 can also be used to determine the RSRP jointly. In the above important scenario, none of the RRHs transmits the CRS, so the UE cannot obtain path loss values of different RRHs, and the base station administered by the macro cell cannot select a proper CoMP cooperating set or CoMP measurement set for the UE. Therefore, it is necessary to develop a measurement mechanism capable of distinguishing different RRHs so as to assist the base station in managing the multi-point cooperating set or measurement set.

A document "ALCATEL-LUCENT ET AL: 'CoMP Operation and UE Mobility, 3GPP DRAFT R1-120496, 2 February 2012 (2012-02-02)" discusses the detailed procedures for triggering CoMP configuration, detection and determination of CoMP cooperating set, configuration of CoMP measurement set and reporting set, and mobility procedures for CoMP. The document inter alia discloses that there are proposals to specify a new RSRP measurement based on CSI-RS.

### Summary of the Invention

The present invention provides a method and a device for measuring enhanced RSRP (eRSRP) of channel state information reference signals (CSI-RSs) of transport points in CoMP, and a method and a device for maintaining a cooperating set based on the measurement, so as to obtain and manage channel state of each transport point.

An embodiment of the present invention provides a method for reporting eRSRP according to claim 1.

Accordingly, another embodiment of the present invention provides a method for maintaining a CoMP measurement set or cooperating set according to claim 11.

Advantageously, a measurement event in the measurement configuration includes determining whether the eRSRP of the measured CSI-RS of the transport point is better than a threshold. According to an embodiment, a measurement event in the measurement configuration includes determining whether the measured eRSRP of the CSI-RS of the transport point is higher than a strongest eRSRP by a preset offset. According to an embodiment, the measurement event further includes determining a transport point with strongest eRSRP through measurement, and then comparing the eRSRP of CSI-RSs of other transport points with the strongest eRSRP. When an exit condition of the two measurement events is satisfied, the measurement report is triggered. In an embodiment, a measurement event in the measurement configuration includes a measurement event A2, A3 or A4 based on protocol TS36.331, and the measurement configuration includes indication information for CSI-RS measurement. After the indication information for CSI-RS measurement is received, the measured eRSRP of the CSI-RS is used for evaluating an entrance condition of the measurement event A2, A3 or A4. In addition, when an exit condition of the measurement event A4 is satisfied, the measurement report is triggered. According to an embodiment of the present invention, evaluating eRSRP of the CSI-RSs of the multiple transport points includes: when a UE detects that the eRSRP of the CSI-RS of at least one of the multiple transport points satisfies an entrance condition of the measurement event, the UE transmits a measurement report to a base station. In another embodiment, when a state that entrance condition of the measurement event is satisfied lasts for TimeToTrigger or longer, the UE transmits the measurement report to the base station. In addition, in an embodiment, setting of S-measure is neglected during measurement and evaluation on eRSRP of the CSI-RSs of the multiple transport points, and when a cell-specific RSRP of a main cell exceeds S-measure, measurement on the eRSRP of the CSI-RSs of the multiple transport points is still performed.

An embodiment of the present invention further provides a UE, including: a CSI-RS receiving device, a measurement device measuring and evaluating eRSRP of CSI-RSs of multiple transport points based on measurement configuration; and a measurement report transmission device.

Another embodiment of the present invention provides a base station, including a measurement report receiving device receiving an eRSRP measurement report; and a cooperating set maintenance device maintaining the measurement set/cooperating set based on the received eRSRP measurement report.

The method and device for measuring eRSRP of CSI-RSs of transport points in CoMP, and the method and device for maintaining a measurement set/cooperating set based on the measurement solve the current problem that reference signal power of transport points in CoMP cannot be obtained, and the method and device are applicable to movement and interference management of the UE, and will promote further development and application of the CoMP technology.

### Brief description of the drawings

FIG. 1 is a flow chart of a method for measuring and reporting eRSRP of CSI-RSs of transport points/cooperating points in CoMP according to an embodiment;
FIG. 2 is a flow chart of a method for maintaining a CoMP cooperating set according to an embodiment of the present invention; and
FIG. 3 is a structural block diagram of a communication system for maintaining a CoMP cooperating set according to an embodiment of the present invention.

### Detailed Description

For better comprehension of the present invention, exemplary embodiments of the present invention are further described in detail below.

Unlike the prior art in which only one cell or only one transport point in the same cell provides a service for a UE, in a CoMP communication system, several cells or several transport points in the same cell provide a service for a UE. Coordinated cells or coordinated transport points in the same cell form a cooperating set that provides the UE with a CoMP solution. Generally, these cells belong to the same frequency band. In non-CoMP, the UE does not need to receive data from multiple cells in the same frequency band or from multiple transport points in the same cell; instead, the UE only needs to receive a Physical Downlink Shared Channel (PDSCH) and a Physical Downlink Control Channel (PDCCH) from a single cell (namely, a main cell). In another aspect, in the existing specifications, RSRP is measured merely based on the CRS and, as a result, a measurement report for RSRP of different transport points cannot be provided, and the RSRP cannot be used for maintaining CoMP.

It should be noted that with the development of technologies and update of standards, components with the same function usually have different names. For example, in LTE, for those skilled in the art, the connotation of a transport point generally includes transport point, port, RHH, and so on. In CoMP, the transport point and the cooperating point are also used in alternation. The technical terms used in the specification of the present invention patent application are for illustrating and demonstrating the technical solution of the present invention. The technical terms are subject to functions in consensus in the technical field, and should not be interpreted arbitrarily according to the names thereof.

An embodiment of the present invention provides a measurement mechanism for eRSRP of CSI-RSs of transport points/cooperating points in CoMP, and maintenance for CoMP configuration based on the measurement. The eRSRP is different from the conventional RSRP, and is not limited to measurement on the CRS; instead, the eRSRP can be used for measurement of any reference signal, and includes RSRP and/or reference signal received quality.

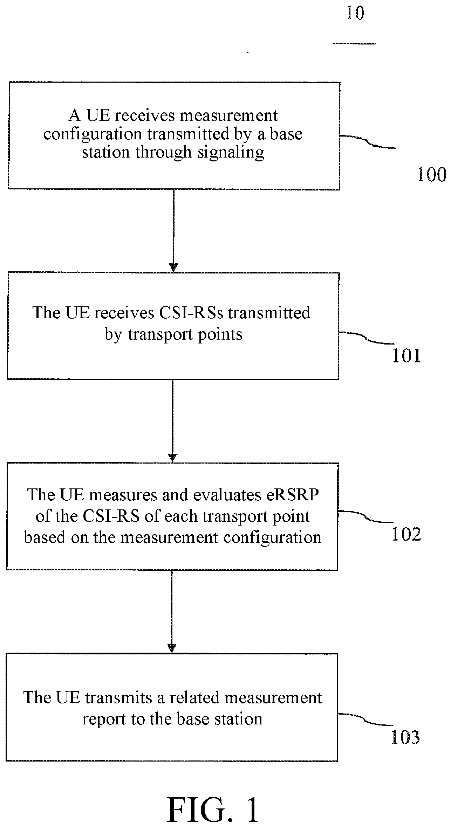

FIG. 1 is a flow chart of a method 10 for measuring and reporting eRSRP of CSI-RSs of transport points/cooperating points in CoMP according to an embodiment. In LTE-10, the CSI-RS has been introduced into the Multiple Input Multiple Output (MIMO), and can be transmitted at one, two, four or eight ports. Specific measurement and reporting are completed by a UE.

In Step 100, a UE receives measurement configuration transmitted by a base station through signaling, where the measurement configuration indicates the UE to measure eRSRP of CSI-RSs of multiple transport points. These transport points may or may not belong to a CoMP measurement set of the UE. The CoMP measurement set refers to a set of transport points whose channel state information such as Channel Quality Indicator (CQI) and Precoding Matrix Indicator (PMI) needs to be fed back by a UE in a physical layer. The UE performing measurement according to the measurement configuration refers to that layer 3 (an upper layer of the physical layer) performing the measurement. The measurement configuration may indicate the UE to measure the eRSRP of the CSI-RSs of the multiple transport points even if cell-specific RSRP of a main cell exceeds S-measure, or may not include such an indication. Through a predefinition of protocol specifications, the UE may still measure, without being indicated by the measurement configuration, the eRSRP of the CSI-RSs of the multiple transport points even if cell-specific RSRP of a main cell exceeds S-measure. The main cell refers to a cell that provides non-access layer movement information (such as location area identification) for the UE, and also refers to a cell with which the UE keeps a Radio Resource Control (RRC) connection. According to the prior art, if the serving base station configures S-measure for the UE, the base station may control whether the UE needs to measure a neighboring cell. Once the RSRP of the main cell is higher than the S-measure, the UE may not perform measurement on the neighboring cell. However, in practice, in order to determine a coordinating transport point or a coordination scheme (Joint Transmission (JT), dynamic point selection, or Coordinated Scheduling/Beamforming (CS/CB)), even if the RSRP of the serving cell is higher than S-measure, the UE still needs to measure eRSRP of CSI-RSs of multiple transport points; otherwise, it is impossible for the serving base station to know which transport point is appropriate for data transmission of the UE, and it is impossible to maintain the cooperating set/CoMP measurement set for the UE.

After receiving the measurement configuration, the UE considers a measurement object, namely, a frequency to be measured. Further, the UE needs to determine CSI-RSs to be measured. In Step 101, the UE receives CSI-RSs transmitted by transport points.

Then in Step 102, the UE measures and evaluates eRSRP of the CSI-RS of each transport point based on measurement configuration. The UE evaluates a measurement result according to an entrance condition or an exit condition of a measurement event. Once it is detected that the CSI-RS measurement result of one or more transport points satisfies the entrance condition (or this state lasts for a period of time which is referred to as TimeToTrigger), the UE lists the measurement result into a measurement report and transmits the measurement report to the base station. That is, only when the entrance condition of the measurement event is satisfied and this state lasts for TimeToTrigger or longer, the UE transmits the measurement report to the base station. According to an embodiment of the present invention, the measurement event may determine whether the eRSRP of the measured CSI-RS of the transport point is better than a threshold, or whether the measured eRSRP of the CSI-RS of the transport point is smaller than strongest eRSRP (or whether the measured eRSRP of the CSI-RS of the transport point is higher than strongest eRSRP by a preset offset, where the offset is a negative value). If the former event is adopted, the measurement configuration includes the threshold, and may also include a CSI-RS specific offset, where the CSI-RS specific offset is used for compensating eRSRP of different transport points. If the latter event is adopted, the UE needs to determine, through comparison, a transport point of which the CSI-RS has the strongest eRSRP among these transport points, and then compare eRSRP values of other CSI-RSs with the strongest eRSRP value. Both measurement events are novel ones not defined in the current protocol. It should be noted that, in the case of inter-cell CoMP, the transport point with the strongest eRSRP is the main cell, and at this time, the measurement event becomes determining whether the eRSRP of CSI-RSs of other cells is higher than the eRSRP of the main cell by a preset offset. The measurement event may also be a measurement event A2, A3 or A4 based on the current protocol TS36.331. In this case, the UE needs to receive a measurement identity including a new triggering amount from the base station, where the new triggering amount is also in the measurement configuration. A measurement object corresponding to the measurement identity indicates multiple CSI-RSs to be measured. The measurement object includes a new Information Element (IE) used for indicating different CSI-RSs, and may also include a CSI-RS specific offset, so as to adjust the measured eRSRP value when the UE evaluates the measurement result. In this case, when receiving the measurement identity, the UE will find the new triggering amount (which may be set to eRSRP) set for the measurement of eRSRP of CSI-RSs, thereby measuring eRSRP of CSI-RSs from different transport points. For a measurement event A4, it is set that the measurement report is triggered when the exit condition thereof is satisfied, which requires a new indication in the measurement configuration to indicate that: if the eRSRP of the CSI-RS of some transport point is lower than the threshold, the UE triggers the measurement report.

In Step 103: the UE transmits the related measurement report to the base station, and in the measurement report, the measured eRSRP value of the CSI-RS is linked to a corresponding CSI-RS identifier to as to distinguish the CSI-RS.

According to an embodiment of the present invention, the measurement configuration may also include a report-on-leave mechanism. If the measurement configuration includes a valid report-on-leave (the report-on-leave is set to True), the UE finds a transport point that satisfies the exit condition of the measurement event in the measurement evaluation. The UE needs to report the measurement report, and reports the transport point that still satisfies the entrance condition of the measurement event currently and the corresponding eRSRP to the base station. If the measurement configuration does not include a report-on-leave mechanism, a new indication is added in the measurement configuration to indicate that when the exit condition of the measurement event is satisfied (for example, the eRSRP of CSI-RS resources is poorer than the threshold, or the eRSRP of CSI-RS resources is greater than the offset of the strongest eRSRP), the UE also reports the measurement report to the base station. For one or more transport points that satisfy the exit condition, the serving base station deletes the transport point(s) from the CoMP measurement set/cooperating set, that is, the serving base station removes the transport point(s) from the CoMP measurement set thereby eliminating the transport point(s) from the cooperating set. It should be noted that, for the measurement event A2, according to an embodiment of the present invention, the serving base station may reuse the measurement event A2 as an enhanced A2. The current A2 measurement is directed to the main cell, while the enhanced A2 is directed to the transport points in the CoMP cooperating set/measurement set. When receiving the measurement report of the enhanced measurement event A2, the serving base station needs to remove the cooperating point (transport point) from the current CoMP cooperating set/measurement set. Once the UE receives the enhanced A2, the UE measures the eRSRP of the CSI-RSs of the transport points in the CoMP measurement set. Once the entrance condition of the A2 is satisfied (that is, the eRSRP of the transport point is lower than the preset threshold), the UE needs to send the measurement report to the base station.

In addition, according to an embodiment of the present invention, test configuration includes TimeToTrigger. The present invention is directed to measurement on eRSRP of CSI-RSs rather than inter-cell movement processing. Therefore, when performing measurement, the UE does not adjust the TimeToTrigger according to the UE speed. When the UE evaluates that the entrance condition or exit condition of the measurement event is satisfied, the UE uses the TimeToTrigger in the measurement configuration. The TimeToTrigger is not adjusted according to the moving speed of the UE. The moving state of the UE does not affect the measurement of eRSRP. However, in the prior art, the measurement event is used for movement management; the UE adjusts the TimeToTrigger configured by the base station according to the moving speed of the UE. For example, the UE detects the movement state and adjusts the TimeToTrigger according to the specifications in TS36.304, and evaluates the measurement object by using the adjusted value.

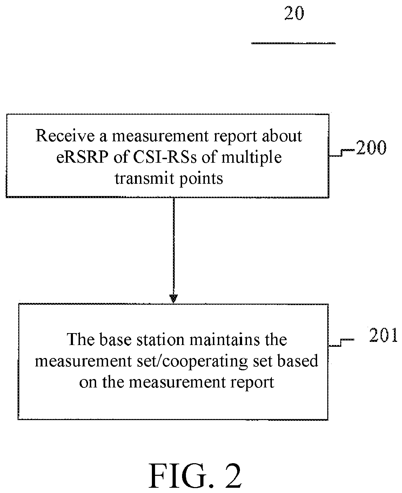

In the present invention, the base station sends the measurement configuration to the UE, so as to measure eRSRP of the CSI-RSs, and meanwhile the measurement configuration is also used for the movement and interference management thereof. On the other hand, the base station can quickly get familiar with definite channel environments of different transport ports based on the received measurement report. FIG. 2 is a flow chart of a method 20 for maintaining a CoMP cooperating set according to an embodiment of the present invention. In Step 200, a base station receives, from a UE, a measurement report about eRSRP of CSI-RSs of multiple transport points. In Step 201, the base station maintains the cooperating set/measurement set based on the measurement report, and maintains (configures), for the UE, the cooperating set/measurement set that provides CoMP for the UE: adding or maintaining a more appropriate transport point in the cooperating set, and eliminating a transport point with a poor channel state from the cooperating set/transport set. The base station configures a CoMP measurement set for the UE according to the measurement report so that the UE feeds back other measurement results, such as PMI, apart from the eRSRP of the CSI-RSs, thereby reporting short-term CSI on a physical uplink control channel or a physical uplink shared channel.

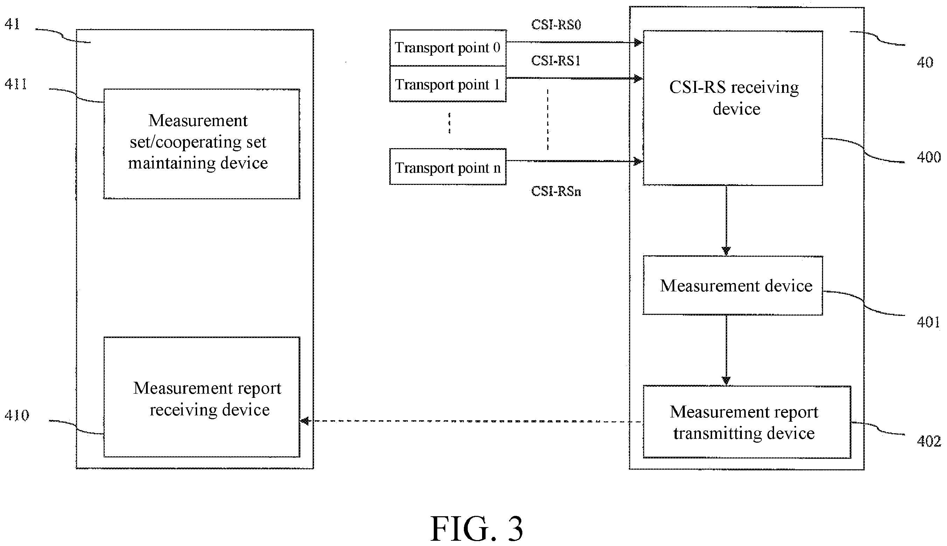

FIG. 3 is a structural block diagram of a communication system for maintaining a CoMP measurement set/cooperating set according to an embodiment of the present invention. In the communication system, the UE 40 includes: a CSI-RS receiving device 400, used for receiving CSI-RSs transmitted by multiple transport points/cooperating points; a measurement device 401, used for measuring and evaluating, based on measurement configuration, eRSRP of the CSI-RSs transmitted by multiple transport points/cooperating points; and a measurement report transmission device 402, used for transmitting a measurement report about the measured eRSRP of the CSI-RSs. Correspondingly, the base station 41 includes a measurement report receiving device 410, used for receiving an eRSRP measurement report; and a cooperating set maintaining device 411, used for maintaining the measurement set/cooperating set based on the received eRSRP measurement report.

The present invention provides a method and a device for measuring and reporting eRSRP of the CSI-RS of each transport point in the CoMP, and a method and a device for maintaining the measurement set/cooperating set based on the related measurement report, thereby solving the problems in the prior art, and facilitating further development and implementation of the CoMPtechnology.

The technical content and technical features of the present invention are disclosed above. However, those skilled in the art can make various replacements and modifications without departing from the scope of the present invention based on the teaching of the present invention. Therefore, the protection scope of the present invention is not limited to the disclosure of the embodiments, but includes all replacements and modifications not departing from the present invention, and shall be covered by the claims of the present patent application.

## Claims

1. A method (10) for reporting enhanced Reference Signal Received Power, eRSRP, the method (10) comprising:
receiving (101) Channel State Information-Reference Signals, CSI-RSs, transmitted by multiple transport points;
measuring and evaluating (102), based on measurement configuration, eRSRP of the CSI-RSs transmitted by the multiple transport points; and
transmitting (103) a measurement report about the eRSRP of the received CSI-RS, wherein a measurement event in the measurement configuration is determining whether the eRSRP of the CSI-RS of the measured transport point is better than a threshold, wherein said measurement configuration includes said threshold and a CSI-RS specific offset for compensating eRSRP of different transport points.

2. The method (10) according to claim 1, wherein a measurement event in the measurement configuration is determining whether the eRSRP of the CSI-RS of the measured transport point is higher than a strongest eRSRP by a preset offset, wherein said strongest eRSRP is associated with a transport point the eRSRP of which has been determined by measurement and has been compared with the eRSRP of CSI-RSs of other transport points.

3. The method (10) according to claim 2, further comprising determining a transport point with the strongest eRSRP through measurement, and then comparing the eRSRP of CSI-RSs of other transport points with the strongest eRSRP.

4. The method (10) according to claim 2 further comprising triggering the measurement report when an exit condition of the two measurement events is satisfied.

5. The method (10) according to claim 1, wherein a measurement event in the measurement configuration is a measurement event A2, A3 or A4 based on protocol TS36.331, and the measurement configuration comprises indication information for CSI-RS measurement.

6. The method (10) according to claim 5, wherein after receiving the indication information for CSI-RS measurement, the eRSRP for CSI-RS measurement is used for evaluating an entrance condition of the measurement event A2, A3 or A4.

7. The method (10) according to claim 5 further comprising triggering the measurement report when an exit condition of the measurement event A4 is satisfied.

8. The method (10) according to claim 1, wherein evaluating the eRSRP of the CSI-RSs of multiple transport points comprises:
when detecting that the eRSRP of the CSI-RS of at least one of the multiple transport points satisfies an entrance condition of a measurement event, the UE (40) transmitting the measurement report to a base station (41).

9. The method (10) according to claim 1, wherein evaluating the eRSRP of the CSI-RSs of multiple transport points comprises:
when detecting that the eRSRP of the CSI-RS of at least one of the multiple transport points satisfies an entrance condition of a measurement event, which lasts for TimeToTrigger or longer, the UE (40) transmitting the measurement report to a base station (41).

10. The method (10) according to claim 1 further comprising:
neglecting setting of S-measure during measurement and evaluation on the eRSRP of the CSI-RSs of the multiple transport points, and still measuring the eRSRP of the CSI-RSs of the multiple transport points when cell-specific Reference Signal Received Power, RSRP, of a main cell exceeds the S-measure.

11. A method (20) for maintaining a Coordinated Multi-Point, CoMP, cooperating set or measurement set, the method (20) comprising:
receiving (200) an enhanced Reference Signal Received Power, eRSRP, measurement report, wherein the measurement report is about eRSRP of Channel State Information-Reference Signals, CSI-RSs, of multiple transport points measured based on measurement configuration; and
maintaining (201) the cooperating set or measurement set based on the received eRSRP measurement report, wherein a measurement event in the measurement configuration is determining whether the eRSRP of the CSI-RS of the measured transport point is better than a threshold, wherein said measurement configuration includes said threshold and a CSI-RS specific offset for compensating eRSRP of different transport points.

12. The method (20) according to claim 11, wherein a measurement event in the measurement configuration is determining whether the eRSRP of the CSI-RS of the measured transport point is higher than a strongest eRSRP by a preset offset, wherein said strongest eRSRP is associated with a transport point the eRSRP of which has been determined by measurement and has been compared with the eRSRP of CSI-RSs of other transport points.

13. The method (20) according to claim 11, a measurement event in the measurement configuration is a measurement event A2, A3 or A4 based on protocol TS36.331, and the measurement configuration comprises indication information for CSI-RS measurement.

14. A user equipment, UE, (40) for reporting enhanced Reference Signal Received Power, eRSRP, comprising:
a State Information-Reference Signal, CSI-RS, receiving device (400) configured to receive CSI-RSs transmitted by multiple transport points;
a measurement device (401) configured to measure and evaluate eRSRP of the CSI-RSs of the multiple transport points based on measurement configuration; and
a measurement report transmission device (402) configured to transmit a measurement report about the eRSRP of the received CSI-RS, wherein a measurement event in the measurement configuration is determining whether the eRSRP of the CSI-RS of the measured transport point is better than a threshold, wherein said measurement configuration includes said threshold and a CSI-RS specific offset for compensating eRSRP of different transport points.

15. The UE (40) according to claim 14, wherein a measurement event in the measurement configuration is determining whether the eRSRP of the CSI-RS of the measured transport point is higher than a strongest eRSRP by a preset offset, wherein said strongest eRSRP is associated with a transport point the eRSRP of which has been determined by measurement and has been compared with the eRSRP of CSI-RSs of other transport points.

16. The UE (40) according to claim 15 configured to determine a transport point with the strongest eRSRP through measurement, and then compare the eRSRP of CSI-RSs of other transport points with the strongest eRSRP.

17. The UE (40) according to claim 15 configured to trigger the measurement report when an exit condition of the two measurement events is satisfied.

18. The UE (40) according to claim 14, wherein a measurement event in the measurement configuration is a measurement event A2, A3 or A4 based on protocol TS36.331, and the measurement configuration comprises indication information for CSI-RS measurement.

19. The UE (40) according to claim 18 configured to, after receiving the indication information for CSI-RS measurement, use the eRSRP for CSI-RS measurement to evaluate an entrance condition of the measurement event A2, A3 or A4.

20. The UE (40) according to claim 18 configured to trigger the measurement report when an exit condition of the measurement event A4 is satisfied.

21. The UE (40) according to claim 14, wherein evaluating the eRSRP of the CSI-RSs of multiple transport points comprises:
when the UE (40) detects that the eRSRP of the CSI-RS of at least one of the multiple transport points satisfies an entrance condition of a measurement event, transmitting the measurement report to a base station (41).

22. The UE (40) according to claim 14, wherein evaluating the eRSRP of the CSI-RSs of multiple transport points comprises:
when detecting that the eRSRP of the CSI-RS of at least one of the multiple transport points satisfies an entrance condition of a measurement event, which lasts for TimeToTrigger or longer, transmitting the measurement report to a base station (41).

23. The UE (40) according to claim 14 configured to:
neglect setting of S-measure during measurement and evaluation on the eRSRP of the CSI-RSs of the multiple transport points, and still measure the eRSRP of the CSI-RSs of the multiple transport points when cell-specific Reference Signal Received Power, RSRP, of a main cell exceeds S-measure.

24. A base station (41) for maintaining a Coordinated Multi-Point, CoMP, measurement set/cooperating set, comprising:
a measurement report receiving device (410) configured to receive an enhanced Reference Signal Received Power, eRSRP, measurement report, wherein the measurement report is about eRSRP of Channel State Information-Reference Signals, CSI-RSs, of multiple transport points measured based on measurement configuration; and
a measurement set/cooperating set maintaining device (411) configured to maintain (210) the measurement set/cooperating set based on the received eRSRP measurement report, wherein a measurement event in the measurement configuration is determining whether the eRSRP of the CSI-RS of the measured transport point is better than a threshold, wherein said measurement configuration includes said threshold and a CSI-RS specific offset for compensating eRSRP of different transport points.

25. The base station (41) according to claim 24, wherein a measurement event in the measurement configuration is determining whether the eRSRP of the CSI-RS of the measured transport point is higher than a strongest eRSRP by a preset offset, wherein said strongest eRSRP is associated with a transport point the eRSRP of which has been determined by measurement and has been compared with the eRSRP of CSI-RSs of other transport points.

26. The base station (41) according to claim 24, wherein a measurement event in the measurement configuration is a measurement event A2, A3 or A4 based on protocol TS36.331, and the measurement configuration comprises indication information for CSI-RS measurement.

## Patentansprüche

1. Verfahren (10) zum Mitteilen erweiterter empfangener Referenzsfgnallelstung, eRSRP, wobei das Verfahren (10) umfasst:
Empfangen (101) von Kanalzustandsinformation-Referenzsignalen, CSI-RSs, die von mehreren Transportpunkten übertragen werden;
Messen und Bewerten (102), auf Grundlage der Messkonfiguration, der eRSRP der CSI-RSs, die von mehreren Transpartpunkten übertragen werden; und
Übertragen (103) eines Messberichts über die eRSRP des empfangenen CSI-RS, wobei ein Messereignis in der Messkonfiguration bestimmt, ob die eRSRP des CSI-RS des gemessenen Transportpunkts besser als ein Schwellenwert ist, wobei besagte Messkonfiguration besagten Schwellenwert und einen CSI-RS spezifischen Versatz zum Ausgleichen der eRSRP verschiedener Transportpunkte einschließt.

2. Verfahren (10) nach Anspruch 1, wobei ein Messereignis in der Messkonfiguration bestimmt, ob die eRSRP des CSI-RS des gemessenen Transportpunkts höher ist als eine stärkste eRSRP mittels eines voreingestellten Versatzes, wobei besagte stärkste eRSRP verbunden ist mit einem Transportpunkt, dessen eRSRP durch Messung bestimmt und verglichen worden ist mit der eRSRP der CSI-RSs anderer Transportpunkte.

3. Verfahren (10) nach Anspruch 2, weiterhin umfassend das Bestimmen eines Transportpunkts mit der stärksten eRSRP durch Messung und anschließender Vergleich der eRSRP der CSI-RSs anderer Transportpunkte mit der stärksten eRSRP.

4. Verfahren (10) nach Anspruch 2, weiterhin umfassend das Auslösen des Messberichts, wenn eine Austrittsbedingung der zwei
Messereignisse erfüllt ist.

5. Verfahren (10) nach Anspruch 1, wobei ein Messereignis in der Messkonfiguration ein Messereignis A2, A3 oder A4 auf Grundlage des Protokolls TS36.331 ist,
und wobei die Messkonfiguration umfasst die Anzeigeinformation für die CSI-RS Messung.

6. Verfahren (10) nach Anspruch 5, wobei nach dem Empfangen der Anzeigeinformation für die CSI-RS Messung die eRSRP für die CSI-RS Messung verwendet wird für das Bewerten eine Eintrittsbedingung des Messereignisses A2, A3 oder A4.

7. Verfahren (10) nach Anspruch 5, weiterhin umfassend das Auslösen des Messberichts, wenn eine Austrittsbedingung des Messereignisses A4 erfüllt ist,

8. Verfahren (10) nach Anspruch 1, wobei das Bewerten der eRSRP der CSI-RSs mehrere Transportpunkte umfasst:
Wenn bestimmt wird, dass die eRSRP des CSI-RS mindestens eines der mehreren Transportpunkte eine Eintrittsbedingung eines Messereignisses erfüllt, überträgt das UE (40) den Messbericht auf eine Basisstation (41).

9. Verfahren (10) nach Anspruch 1, wobei das Bewerten der eRSRP der CSI-RSs mehrerer Transportpunkte umfasst:
Wenn bestimmt wird, dass die eRSRP des CSI-RS mindestens eines der mehreren Transportpunkte eine Eintrittsbedingung eines Messereignisses erfüllt, welches TimeTaTrigger oder länger dauert, überträgt das UE (40) den Messbericht auf eine Basisstation (41).

10. Verfahren (10) nach Anspruch 1, weiterhin umfassend:
Ablehnen der Einstellung der S-Messung während der Messung und Bewertung mittels der eRSRP der CSI-RSs der mehreren Transportpunkte, und dennoch Messen der eRSRP der CSI-RSs der mehreren Transportpunkte, wenn die zellspezifische empfangenen Referenzsignalleistung, RSRP, einer Hauptzelle die Messung überschreitet.

11. Verfahren (20) zum Aufrechterhalten eines koordinierten Mehrfachpunkt, CoMP, Kooperationssatzes oder Messsatzes, wobei das Verfahren (20) umfasst:
Empfangen eines (200) erweiterten empfangenen Referenzsignalleistung, eRSRP, Messberichts, wobei der Messbericht von der eRSRP der Kanalzustandsinformation-Referenzsignale, CSI-RSs, mehrerer Transportpunkte handelt, die auf Grundlage der Messkonfiguration gemessen werden; und
Aufrechterhalten (201) des Kooperationssatzes oder Messsatzes auf Grundlage des empfangenen eRSRP Messberichts, wobei ein Messereignis in der Messkonfiguration bestimmt, ob die eRSRP des CSI-RS des gemessenen Transportpunkts besser als ein Schwellenwert ist, wobei besagte Messkonfiguration besagten Schwellenwert und einen CSI-RS spezifischen Versatz zum Ausgleichen der eRSRP verschiedener Transportpunkte einschließt.

12. Verfahren (20) nach Anspruch 1, wobei ein Messereignis in der Messkonfiguration bestimmt, ob die eRSRP des CSI-RS des gemessenen Transportpunkts höher ist als eine stärkste eRSRP mittels eines voreingestellten Versatzes, wobei besagte stärkste eRSRP verbunden ist mit einem Transportpunkt, dessen eRSRP durch Messung bestimmt und verglichen worden ist mit der eRSRP der CSI-RSs anderer Transportpunkte.

13. Verfahren (20) nach Anspruch 11, wobei ein Messereignis in der Messkonfiguration ein Messereignis A2, A3 oder A4 auf Grundlage des Protokolls TS36.331 ist, und wobei die Messkonfiguration umfasst die Anzeigeinformation für die CSI-RS Messung,

14. Teilnehmergerät, UE, (40) für das Mitteilen erweiterter empfangener Referenzsignalleistung, eRSRP, umfassend:
eine Zustandsinformation-Referenzsignal, CSI-RS, Empfangsvorrichtung (400), die konfiguriert ist zum Empfangen von CSI-RSs, die von mehreren Transportpunkten übertragen werden;
eine Messvorichtung (401), die konfiguriert ist zum Messen und Bewerten der eRSRP der CSI-RSs der mehreren Transportpunkte auf Grundlage der Messkonfiguration; und
eine Messbericht-Sendevorrichtung (402), die konfiguriert ist zum Übertragen eines Messberichts über die eRSRP des empfangenen CSI-RS, wobei ein Messereignis in der Messkonfiguration bestimmt, ob die eRSRP des CSI-RS des gemessenen Transportpunkts besser als ein Schwellenwert ist, wobei besagte Messkonfiguration besagten Schwellenwert und einen CSI-RS spezifischen Versatz zum Ausgleichen der eRSRP verschiedener Transportpunkte einschließt.

15. UE (40) nach Anspruch 14, wobei ein Messereignis in der Messkonfiguration bestimmt, ob die eRSRP des CSI-RS des gemessenen Transportpunkts höher ist als eine stärkste eRSRP mittels eines voreingestellten Versatzes, wobei besagte stärkste eRSRP verbunden ist mit einem Transportpunkt, dessen eRSRP durch Messung bestimmt und verglichen worden ist mit der eRSRP der CSI-RSs anderer Transportpunkte.

16. UE (40) nach Anspruch 15, konfiguriert zum Bestimmen eines Transportpunkts mit der stärksten eRSRP durch Messung und anschließender Vergleich der eRSRP der CSI-RSs anderer Transportpunkte mit der stärksten eRSRP.

17. UE (40) nach Anspruch 15, konfiguriert zum Auslösen des Messberichts, wenn eine Austrittsbedingung der zwei Messereignisse erfüllt ist.

18. UE (40) nach Anspruch 14, wobei ein Messereignis in der Messkonfiguration ein Messereignis A2, A3 oder A4 auf Grundlage des Protokolls TS36.331 ist,
und wobei die Messkonfiguration umfasst die Anzeigeinformation für die CSI-RS Messung.

19. UE (40) nach Anspruch 18, konfiguriert, nach dem Empfangen der Anzeigeinformation für die CSI-RS Messung, zum Verwenden der eRSRP für die CSI-RS Messung zum Bewerten einer Eintrittsbedingung des Messereignisses A2, A3 oder A4.

20. UE (40) nach Anspruch 18, konfiguriert zum Auslösen des Messberichts, wenn eine Austrittsbedingung des Messereignisses A4 erfüllt ist.

21. UE (40) nach Anspruch 14, wobei das Bewerten der eRSRP der CSI-RSs mehrerer Transportpunkte umfasst:
Wenn das UE (40) erkennt, dass die eRSRP des CSI-RS mindestens eines der mehreren Transportpunkte eine Eintrittsbedingung eines Messereignisses erfüllt, Übertragen des Messberichts auf eine Basisstation (41).

22. UE (40) nach Anspruch 14, wobei das Bewerten der eRSRP der CSI-RSs mehrerer Transportpunkte umfasst:
Wenn erkannt wird, dass die eRSRP des CSI-RS mindestens eines der mehreren Transportpunkte eine Eintrittsbedingung eines Messereignisses erfüllt, welches TimeToTrigger oder länger dauert, Übertragen des Messberichts auf eine Basisstation (41).

23. UE (40) nach Anspruch 14, konfiguriert zum:
Ablehnen der S-Messung während der Messung und Bewerten mittels der eRSRP der CSI-RSs der mehreren Transportpunkte und dennoch Messen der eRSRP der CSI-RSs der mehreren Transportpunkte, wenn zellspezifische empfangene Referenzsignalleistung, RSRP, einer Hauptzelle die S-Messung überschreitet.

24. Basisstation (41) zum Aufrechterhalten eines koordinierten Mehrfachpunkt, CoMP, Messsatzes/Kooperationssatzes, umfassend:
eine Messbericht-Empfangsvorrichtung (410), die konfiguriert ist zum Empfangen eines erweiterten empfangenen Referenzsignalleistung, eRSRP, Messberichts, wobei der Messbericht von der eRSRP der Kanalzustandsinformation-Referenzsignale, CSI-RSs, mehrerer Transportpunkte handelt, die auf Grundlage der Messkonfiguration gemessen werden; und
eine Messsatz-/Kooperationssatz-Erhaltungsvorrichtung
(411), die konfiguriert ist zum Aufrechterhalten (210) des Messsatzes/Kooperationssatzes auf Grundlage des empfangenen eRSRP Messberichts, wobei ein Messereignis in der Messkonfiguration bestimmt, ob die eRSRP des CSI-RS des gemessenen Transportpunkts besser als ein Schwellenwert ist, wobei besagte Messkonfiguration besagten Schwellenwert und einen CSI-RS spezifischen Versatz zum Ausgleichen der eRSRP verschiedener Transportpunkte einschließt.

25. Basisstation (41) nach Anspruch 24, wobei ein Messereignis in der Messkonfiguration bestimmt, ob die eRSRP des CSI-RS des gemessenen Transportpunkts höher ist als eine stärkste eRSRP mittels eines voreingestellten Versatzes, wobei besagte stärkste eRSRP verbunden ist mit einem Transportpunkt, dessen eRSRP durch Messung bestimmt und verglichen worden ist mit der eRSRP der CSI-RSs anderer Transportpunkte.

26. Basisstation (41) nach Anspruch 24, wobei ein Messereignis in der Messkonfiguration ein Messereignis A2, A3 oder A4 auf Grundlage des Protokolls TS36.331 ist, und wobei die Messkonfiguration Anzeigeinformation für die CSI-RS Messung umfasst.

## Revendications

1. Procédé (10) destiné à communiquer la puissance reçue d'un signal de référence amélioré, eRSRP, le procédé (10) comprenant les étapes suivantes :
recevoir (101) des signaux de référence d'informations d'état de canal, CSI-RS, transmis par de multiples points de transport ;
mesurer et évaluer (102), sur la base d'une configuration de mesure, la puissance eRSRP des signaux CSI-RS transmis par les multiples points de transport ; et
transmettre (103) un rapport de mesure concernant la puissance eRSRP des signaux CSI-RS reçus, un événement de mesure dans la configuration de mesure consistant à déterminer si la puissance eRSRP du signal CSI-RS du point de transport mesuré est supérieure à un seuil, ladite configuration de mesure comprenant ledit seuil et un décalage spécifique de signal CSI-RS destiné à compenser la puissance eRSRP des différents points de transport.

2. Procédé (10) selon la revendication 1, dans lequel un événement de mesure dans la configuration de mesure consiste à déterminer si la puissance eRSRP du signal CSI-RS du point de transport mesuré est supérieure à la puissance eRSRP la plus élevée d'un décalage prédéfini, ladite puissance eRSRP la plus élevée étant associée à un point de transport dont la puissance eRSRP a été déterminée par la mesure et a été comparée à la puissance eRSRP des signaux CSI-RS des autres points de transport.

3. Procédé (10) selon la revendication 2, comprenant en outre l'étape consistant à déterminer par la mesure un point de transport ayant la puissance eRSRP la plus élevée, puis à comparer la puissance eRSRP des signaux CSI-RS des autres points de transport à la puissance eRSRP la plus élevée.

4. Procédé (10) selon la revendication 2, comprenant en outre le déclenchement du rapport de mesure lorsqu'une condition de sortie des deux événements de mesure est satisfaite.

5. Procédé (10) selon la revendication 1, dans lequel un événement de mesure dans la configuration de mesure est un événement de mesure A2, A3 ou A4 selon le protocole TS 36.331, et la configuration de mesure comprend des informations d'indication pour la mesure de signal CSI-RS.

6. Procédé (10) selon la revendication 5, dans lequel après réception des informations d'indication pour la mesure de signal CSI-RS, la puissance eRSRP pour la mesure de signal CSI-RS est utilisée afin d'évaluer une condition d'entrée de l'événement de mesure A2, A3 ou A4.

7. Procédé (10) selon la revendication 5 comprenant en outre le déclenchement du rapport de mesure lorsqu'une condition de sortie de l'événement de mesure A4 est satisfalte.

8. Procédé (10) selon la revendication 1, dans lequel l'évaluation de la puissance eRSRP des signaux CSI-RS de multiples points de transport comprend l'étape suivante :
lorsqu'il est détecté que la puissance eRSRP du signal CSI-RS d'au moins l'un des multiples points de transport satisfait à une condition d'entrée d'un événement de mesure, l'UE (40) transmet le rapport de mesure à une station de base (41).

9. Procédé (10) selon la revendication 1, dans lequel l'évaluation de la puissance eRSRP des signaux CSI-RS de multiples points de transport comprend l'étape suivante :
lorsqu'il est détecté que la puissance eRSRP du signal CSI-RS d'au moins l'un des multiples points de transport satisfait à une condition d'entrée d'un événement de mesure, qui dure pendant un temps TimeToTrigger ou plus longtemps, l'UE (40) transmet le rapport de mesure à une station de base (41).

10. Procédé (10) selon la revendication 1, comprenant en outre les étapes suivantes :
négliger le réglage de S-measure pendant la mesure et l'évaluation de la puissance eRSRP des signaux CSI-RS des multiples points de transport, et continuer à mesurer la puissance eRSRP des signaux CSI-RS des multiples points de transport lorsque la puissance reçue d'un signal de référence, RSRP, spécifique à une cellule, d'une cellule principale dépasse la valeur S-measure.

11. Procédé (20) destiné à maintenir un ensemble de coopération ou un ensemble de mesure de multipoint coordonné, CoMP, le procédé (20) comprenant les étapes suivantes :
recevoir (200) un rapport de mesure de la puissance reçue d'un signal de référence amélioré, eRSRP, le rapport de mesure concernant la puissance eRSRP de signaux de référence d'informations d'état de canal, CSI-RS, de multiples points de transport mesurés selon une configuration de mesure ; et
maintenir (201) l'ensemble de coopération ou l'ensemble de mesure selon le rapport de mesure de la puissance eRSRP reçu, un événement de mesure dans la configuration de mesure consistant à déterminer si la puissance eRSRP du signal CSI-RS du point dé transport mesuré est supérieure à un seuil, ladite configuration de mesure comprenant ledit seuil et un décalage spécifique de signal CSI-RS destiné à compenser la puissance eRSRP des différents points de transports.

12. Procédé (20) selon la revendication 11, dans lequel un événement de mesure dans la configuration de mesure consiste à déterminer si la puissance eRSRP du signal CSI-RS du point de transport mesuré est supérieure à la puissance eRSRP la plus élevée d'un décalage prédéfini, ladite puissance eRSRP la plus élevée étant associée à un point de transport dont la puissance eRSRP a été déterminée par la mesure et a été comparée à la puissance eRSRP des signaux CSI-RS des autres points de transport.

13. Procédé (20) selon la revendication 11, dans lequel un événement de mesure dans la configuration de mesure est un événement A2, A3 ou A4 selon le protocole TS 36.331, et la configuration de mesure comprend des informations d'indication pour la mesure de signal CSI-RS.

14. Équipement d'utilisateur, UE, (40) destiné à communiquer la puissance reçue d'un signal de référence amélioré, eRSRP, comprenant :
un dispositif de réception (400) de signal de référence d'informations d'état de canal, CSI-RS, configuré pour recevoir des signaux CSI-RS transmis par de multiples points de transport ;
un dispositif de mesure (401) configuré pour mesurer et évaluer la puissance eRSRP des signaux CSI-RS des multiples points de transport selon la configuration de mesure ; et
un dispositif de transmission de rapport de mesure (402) configuré pour transmettre un rapport de mesure concernant la puissance eRSRP du signal CSI-RS reçu, un événement de mesure dans la configuration de mesure consistant à déterminer si la puissance eRSRP du signal CSI-RS du point de transport mesuré est supérieure à un seuil, ladite configuration de mesure comprenant ledit seuil et un décalage spécifique de signal CSI-RS pour compenser la puissance eRSRP des différents points de transport.

15. UE (40) selon la revendication 14, dans lequel un événement de mesure dans la configuration de mesure consiste à déterminer si la puissance eRSRP du signal CSI-RS du point de transport mesuré est supérieure à la puissance eRSRP la plus élevée d'un décalage prédéfini, ladite puissance eRSRP la plus élevée étant associée à un point de transport dont la puissance eRSRP a été déterminée par la mesure et a été comparée à la puissance eRSRP des signaux CSI-RS des autres points de transport.

16. UE (40) selon la revendication 15 configuré pour déterminer par la mesure un point de transport ayant la puissance eRSRP la plus élevée, puis comparer la puissance eRSRP des signaux CSI-RS des autres points de transport à la puissance eRSRP la plus élevée.

17. UE (40) selon la revendication 15 configuré pour déclencher le rapport de mesure lorsqu'une condition de sortie des deux événements de mesure est satisfaite.

18. UE (40) selon la revendication 14, dans lequel un événement de mesure dans la configuration de mesure est un événement de mesure A2, A3 ou A4 selon le protocole TS 36.331, et la configuration de mesure comprend des informations d'indication pour la mesure de signal CSI-RS.

19. UE (40) selon la revendication 18 configuré pour, après réception des informations d'indication pour la mesure de signal CSI-RS, utiliser la puissance eRSRP pour la mesure de signal CSI-RS afin d'évaluer une condition d'entrée de l'événement de mesure A2, A3 ou A4:

20. UE (40) selon la revendication 18 configuré pour déclencher le rapport de mesure lorsqu'une condition de sortie de l'événement de mesure A4 est satisfaite,

21. UE (40) selon la revendication 14, dans lequel l'évaluation de la puissance eRSRP des signaux CSI-RS des multiples points de transport comprend l'étape suivante:
lorsque l'UE (40) détecte que la puissance eRSRP du signal CSI-RS d'au moins l'un des multiples points de transport satisfait à une condition d'entrée d'un événement de mesure, transmettre le rapport de mesure à une station de base (41).

22. UE (40) selon la revendication 14, dans lequel l'évaluation de la puissance eRSRP des signaux CSI-RS de multiples points de transport comprend l'étape suivante :
lorsqu'il est détecté que la puissance eRSRP du signal CSI-RS d'au moins l'un des multiples points de transport satisfait à une condition d'entrée d'un événement de mesure, qui dure pendant le temps TimeToTrigger ou plus longtemps, transmettre le rapport de mesure à une station de base (41).

23. UE (40) selon la revendication 14 configuré pour :
négliger le réglage de S-measure pendant la mesure et l'évaluation de la puissance eRSRP des signaux CSI-RS des multiples points de transport, et continuer à mesurer la puissance eRSRP des signaux CSI-RS des multiples points de transport lorsque la puissance reçue d'un signal de référence, RSRP, spécifique à une cellule, d'une cellule principale dépasse S-measure.

24. Station de base (41) destinée à maintenir un ensemble de coopération/ensemble de mesure de multipoint coordonné, CoMP, comprenant :
un dispositif de réception de rapport de mesure (410) configuré pour recevoir un rapport de mesure de la puissance reçue d'un signal de référence amélioré, eRSRP, le rapport de mesure concernant la puissance eRSRP de signaux de référence d'informations d'état de canal, CSI-RS, de multiples points de transport mesurés selon une configuration de mesure ; et
un dispositif de maintien d'ensemble de mesure/ensemble de coopération (411) configuré pour maintenir (210) l'ensemble de mesure/ensemble de coopération selon le rapport de mesure de puissance eRSRP reçu, un événement de mesure dans la configuration de mesure consistant à déterminer si la puissance eRSRP du signal CSI-RS du point de transport mesuré est supérieure à un seuil, ladite configuration de mesure comprenant ledit seuil et un décalage spécifique de signal CSI-RS destiné à compenser la puissance eRSRP des différents points de transport.

25. Station de base (41) selon la revendication 24, dans laquelle un événement de mesure dans la configuration de mesure consiste à déterminer si la puissance eRSRP du signal CSI-RS du point de transport mesuré est supérieure à la puissance eRSRP la plus élevée d'un décalage prédéfini, ladite puissance eRSRP la plus élevée étant associée à un point de transport dont la puissance eRSRP a été déterminée par la mesure et a été comparée à la puissance eRSRP des signaux CSI-RS des autres points de transport.

26. Station de base (41) selon la revendication 24, dans laquelle un événement de mesure dans la configuration de mesure est un événement de mesure A2, A3 ou A4 selon le protocole TS 36.331, et la configuration de mesure comprend des informations d'indication pour la mesure de signal CSI-RS.
